# EUROPÄISCHE PATENTSCHRIFT

(11) **EP 4 031 384 B1**
(45) Veröffentlichungstag und Bekanntmachung des Hinweises auf die Patenterteilung: **14.08.2024**
(21) Anmeldenummer: 20771215.9
(22) Anmeldetag: 01.09.2020
(51) Int. Cl.: B60C 11/04, B60C 11/13, B60C 11/24

(54) **FAHRZEUGREIFEN MIT QUERRIPPEN**
VEHICLE TYRE WITH TRANSVERSE RIBS
PNEUMATIQUE DE VÉHICULE COMPORTANT DES NERVURES TRANSVERSALES

(30) Priorität: 16.09.2019 DE 102019214042
(43) Veröffentlichungstag der Anmeldung: 27.07.2022
(73) Patentinhaber: Continental Reifen Deutschland GmbH, 30175 Hannover (DE)
(72) Erfinder: PANG-JIAN-XIANG, Edwin, 30419 Hannover (DE); GLEESON, Ruaidhri, 30419 Hannover (DE)
(74) Vertreter: Continental Corporation
(86) Internationale Anmeldenummer: PCT/EP2020/074259
(87) Internationale Veröffentlichungsnummer: WO 2021/052741

(56) Entgegenhaltungen:
- EP-A1- 2 165 857
- DE-A1- 102009 003 592
- JP-A- 2002 219 909
- US-A- 2 254 778
- US-A- 2 701 598
- US-A- 4 353 402

## Beschreibung

Die vorliegende Erfindung betrifft einen Fahrzeugreifen mit Querrippen sowie ein Verfahren, ein Computerprogramm mit Instruktionen und eine Vorrichtung zum Entwerfen eines solchen Fahrzeugreifens.

Neben Wind- und Motorgeräuschen trägt die Schallabstrahlung der Fahrzeugreifen stark zur gesamten Geräuschemission eines Fahrzeugs bei. Bei einem luftdicht auf einer Felge montierten Fahrzeugreifen, der auf einer Fahrbahn abrollt, entstehen beispielsweise Geräusche durch Vibrationen der im Reifen eingeschlossenen Luft. Diese werden sowohl in den Fahrgastraum als auch an die Umgebung außerhalb des Fahrzeugs übertragen.

Zur Reduzierung solcher Vibrationen beschreibt DE 10 2017 207 596 A1 einen Fahrzeugluftreifen mit wenigstens einem in seinem Inneren an der dem Laufstreifen gegenüberliegenden Innenfläche haftend angebrachten Geräuschabsorber. Der wenigstens eine Geräuschabsorber haftet an einem Klebemittel.

Eine weitere Ursache der Schallabstrahlung von Fahrzeugreifen ist das Abrollgeräusch.

Dieses wird verursacht durch das Auftreffen des Laufstreifenprofils auf die Fahrbahnoberfläche. Die Gestaltung des Laufstreifenprofils hat dabei einen wesentlichen Einfluss auf sie Schallabstrahlung.

In diesem Zusammenhang beschreibt EP 0 989 000 A2 einen Luftreifen für ein Fahrzeug. Der Reifenkörper besteht im Wesentlichen aus zwei Seitenwänden, einer mit Karkassenlagen und ggf. mit Verstärkungselementen versehenen Karkasse, einem aus Gürtellagen und ggf. einer ein- oder mehrteiligen Gürtelbandage, einem mit einem Laufstreifenprofil versehenen Laufstreifen und weiteren Einlagen bestehenden Gürtelpaket, sowie aus zwei mit Wulstkernen versehenen Reifenwülsten. Mindestens innerhalb von Teilbereichen des Reifenkörpers ist eine Vielzahl von Hohlraum-Resonatoren angeordnet, die mit Öffnungen in der Oberfläche des Luftreifens in Verbindung stehen.

Die Laufstreifen von Fahrzeugreifen sind üblicherweise mit Abriebindikatoren versehen, auch als Tread-Wear-Indikatoren (TWI) bezeichnet. Diese dienen dazu, die gesetzliche Mindestprofiltiefe optisch anzeigen. Da es in Hinblick auf die Fahrsicherheit sinnvoll ist, die Reifen bereits vor Erreichen der Mindestprofiltiefe zu wechseln, sind die Abriebindikatoren so ausgestaltet, dass sicherheitsrelevante Zustände rechtzeitig angezeigt werden. Als Bestandteil des Laufstreifens tragen auch die Abriebindikatoren zum entstehenden Abrollgeräusch bei.

In diesem Zusammenhang beschreibt DE 10 2017 207 945 A1 einen Fahrzeugreifen mit einem Laufstreifenprofil. Das Laufstreifenprofil weist durch Rillen voneinander getrennte Profilelemente auf, wobei die Rillen in radialer Richtung nach innen durch einen Rillengrund und die Profilelemente in radialer Richtung nach außen durch eine die Bodenkontaktfläche bildende radial äußere Oberfläche begrenzt werden. In den Rillen ist wenigstens ein Abriebindikator ausgebildet, der aus einem aus dem Rillengrund in radialer Richtung nach außen erstreckten Gummiklotz mit einer den Gummiklotz in radialer Richtung nach radial außen hin begrenzenden Fläche und mit einer in der Fläche ausgebildeten, eine Schwelle des Abriebes anzeigenden X-förmigen Linie ausgebildet ist.

US 2,701,598 beschreibt eine Reifenlauffläche mit einer Vielzahl von sich in Umfangsrichtung erstreckenden Rippen und Rillen, wobei die radial äußeren Abschnitte der Rippen im wesentlichen gerade Seiten haben und in einer Richtung quer zum Reifen in eine Vielzahl von Laufflächensegmenten unterteilt sind, und mit einer Vielzahl von in Umfangsrichtung beabstandeten Ausstülpungen in den Wänden der radial inneren Abschnitte der Rippen. Die Ausstülpungen erstrecken sich von den Wänden der Rippen in die Rillen und zum Grund der Rillen. Jede der Ausstülpungen hat ebene Flächen, die sich in einer Kante schneiden. Die ebenen Flächen sind so angeordnet, dass sich die Kante von einer Position an der Wand einer der Rippen radial innerhalb des Rippenumfangs zu einer Position am Grund der Rille in der Nähe der zugewandten Seitenwand einer benachbarten Rippe erstreckt.

US 4,353,402 beschreibt eine Reifenlauffläche, die so konzipiert ist, dass sie parallele Schlitze zur Verbesserung der Traktion und der Lebensdauer nutzt und gleichzeitig Risse und das Abbrechen von Laufflächenelementen während des Gebrauchs vermeidet. Zur Versteifung von Laufflächensegmenten sind in Rillen der Reifenlauffläche Querrippen angeordnet, die unterschiedliche Höhen aufweisen können.

JP 2002-219909 A beschreibt einen Luftreifen mit einer Vielzahl von Längsrillen, die sich in der Umfangsrichtung des Reifens auf seiner Lauffläche erstrecken. In mindestens einer der Rillen sind zur Geräuschreduzierung ein oder mehrere Vorsprünge platziert. Die Vorsprünge können unterschiedliche Abmessungen aufweisen.

Es ist eine Aufgabe der vorliegenden Erfindung, Lösungen für eine Reduzierung der im Fahrbetrieb eines Fahrzeugreifens auftretenden Geräuschentwicklung bereitzustellen.

Diese Aufgabe wird durch einen Fahrzeugreifen mit den Merkmalen des Anspruchs 1, durch ein Verfahren mit den Merkmalen des Anspruchs 10, durch ein Computerprogramm mit Instruktionen mit den Merkmalen des Anspruchs 11 und durch eine Vorrichtung mit den Merkmalen des Anspruchs 12 gelöst. Bevorzugte Ausgestaltungen der Erfindung sind Gegenstand der abhängigen Ansprüche.

Gemäß einem ersten Aspekt der Erfindung weist ein Fahrzeugreifen ein Laufstreifenprofil mit durch Umfangsrillen voneinander getrennten Profilbändern und mit in den Umfangsrillen angeordneten Querrippen auf, wobei die Querrippen jeweils eine Höhe über einem Rillengrund der jeweiligen Umfangsrille haben und sich jeweils über eine gesamte Breite der jeweiligen Umfangsrille erstrecken, und wobei die Querrippen ausgebildet sind, während eines Fahrbetriebs am Fahrzeugreifen auftretende Luftströmungen so zu beeinflussen, dass aus den Luftströmungen resultierende Geräusche über ein breites Frequenzspektrum verteilt werden. Dazu weisen die Querrippen zumindest zum Teil unterschiedliche Längen in einer Umfangsrichtung des Fahrzeugreifens auf.

Gemäß einem weiteren Aspekt der Erfindung umfasst ein Verfahren zum Entwerfen eines Fahrzeugreifens die Schritte:
- Auswählen von initialen Parametern von Querrippen eines Laufstreifenprofils des Fahrzeugreifens, wobei die Querrippen jeweils eine Höhe über einem Rillengrund einer Umfangsrille haben, in der die jeweiligen Querrippen angeordnet sind, und sich jeweils über eine gesamte Breite der jeweiligen Umfangsrille erstrecken;
- Simulieren von in einem Fahrbetrieb des Fahrzeugreifens auftretenden Geräuschen für eine Vielzahl von Abwandlungen der initialen Parameter der Querrippen; und
- Bestimmen von Parametern der Querrippen, für die die im Fahrbetrieb auftretenden Geräusche über ein breites Frequenzspektrum verteilt sind, wobei die Parameter der Querrippen derart bestimmt werden, dass die innerhalb einer Umfangsrille angeordneten Querrippen zumindest zum Teil unterschiedliche Längen in einer Umfangsrichtung des Fahrzeugreifens aufweisen.

Gemäß einem weiteren Aspekt der Erfindung umfasst ein Computerprogramm Instruktionen, die bei Ausführung durch einen Computer den Computer zur Ausführung der folgenden Schritte zum Entwerfen eines Fahrzeugreifens veranlassen:
- Auswählen von initialen Parametern von Querrippen eines Laufstreifenprofils des Fahrzeugreifens, wobei die Querrippen jeweils eine Höhe über einem Rillengrund einer Umfangsrille haben, in der die jeweiligen Querrippen angeordnet sind, und sich jeweils über eine gesamte Breite der jeweiligen Umfangsrille erstrecken;
- Simulieren von in einem Fahrbetrieb des Fahrzeugreifens auftretenden Geräuschen für eine Vielzahl von Abwandlungen der initialen Parameter der Querrippen; und
- Bestimmen von Parametern der Querrippen, für die die im Fahrbetrieb auftretenden Geräusche über ein breites Frequenzspektrum verteilt sind, wobei die Parameter der Querrippen derart bestimmt werden, dass die innerhalb einer Umfangsrille angeordneten Querrippen zumindest zum Teil unterschiedliche Längen in einer Umfangsrichtung des Fahrzeugreifens aufweisen.

Der Begriff Computer ist dabei breit zu verstehen. Insbesondere umfasst er auch Workstations und andere prozessorbasierte Datenverarbeitungsvorrichtungen.

Das Computerprogramm kann beispielsweise für einen elektronischen Abruf bereitgestellt werden oder auf einem computerlesbaren Speichermedium gespeichert sein.

Gemäß einem weiteren Aspekt der Erfindung hat eine Vorrichtung zum Entwerfen eines Fahrzeugreifens:
- eine Auswahleinheit zum Auswählen von initialen Parametern von Querrippen eines Laufstreifenprofils des Fahrzeugreifens, wobei die Querrippen jeweils eine Höhe über einem Rillengrund einer Umfangsrille haben, in der die jeweiligen Querrippen angeordnet sind, und sich jeweils über eine gesamte Breite der jeweiligen Umfangsrille erstrecken; und
- eine Recheneinheit zum Simulieren von in einem Fahrbetrieb des Fahrzeugreifens auftretenden Geräuschen für eine Vielzahl von Abwandlungen der initialen Parameter der Querrippen und zum Bestimmen von Parametern der Querrippen, für die die im Fahrbetrieb auftretenden Geräusche über ein breites Frequenzspektrum verteilt sind, wobei die Recheneinheit die Parameter der Querrippen derart bestimmt, dass die innerhalb einer Umfangsrille angeordneten Querrippen zumindest zum Teil unterschiedliche Längen in einer Umfangsrichtung des Fahrzeugreifens aufweisen.

Bei der erfindungsgemäßen Lösung wird der Ansatz verfolgt, die Querrippen strategisch so zu gestalten und in den Umfangsrillen zu positionieren, dass eine bessere Frequenzverteilung der entstehenden Geräusche erreicht wird. Während durch die Querrippen Luft aus den Umfangsrillen gepresst wird, können durch die Ausgestaltung der Querrippen Störungen im Luftstrom hervorgerufen werden, die indirekt die auftretenden Geräuschfrequenzen beeinflussen. Auf diese Weise ist es möglich, ausgeprägte Peaks im Frequenzspektrum zu reduzieren, sodass diese als weniger störend wahrgenommen werden. Durch die unterschiedliche Längen in Umfangsrichtung werden gezielt Störungen im Luftstrom hervorgerufen und so die gewünschte Verteilung der auftretenden Geräusche über ein breites Frequenzspektrum erreicht.

Gemäß einem Aspekt der Erfindung werden die Geräusche homogen über das breite Frequenzspektrum verteilt. Bei einer homogenen oder zumindest weitgehend homogenen Verteilung sind praktisch keine Peaks mehr vorhanden, die von Personen als störend empfunden werden könnten.

Gemäß einem Aspekt der Erfindung weisen die Querrippen zusätzlich zumindest zum Teil unterschiedliche Höhen in Bezug auf einen Rillengrund oder unterschiedliche Abstände in Umfangsrichtung auf. Auch diese Parameter sind geeignet, um gezielt Störungen im Luftstrom hervorzurufen und so die gewünschte Verteilung der auftretenden Geräusche über ein breites Frequenzspektrum zu erreichen. Dabei hat sich gezeigt, dass neben den Längen der Querrippen in Umfangsrichtung das Verhältnis der Abstände aufeinanderfolgender Querrippen den größten Einfluss auf die Frequenzverteilung haben.

Gemäß einem Aspekt der Erfindung liegt ein Verhältnis von Abständen aufeinanderfolgender Querrippen innerhalb einer Umfangsrille im Bereich von 1 bis 3. Alternativ oder zusätzlich liegt ein Verhältnis von Abständen aufeinanderfolgender Querrippen in benachbarten Umfangsrillen im Bereich von 1 bis 3. Vorzugsweise weisen die Querrippen dabei eine Länge im Bereich von 5 mm bis 60 mm auf. In Simulationen und Experimenten hat sich gezeigt, dass mit Abstandsverhältnissen und Längen in diesen Bereichen gute Resultate bei der Lärmreduzierung erreicht werden können. Zugleich sind die Wertebereiche ausreichend klein, um den Simulationsaufwand bei der Bestimmung eines geeigneten Satzes von Parametern in einem vertretbaren Rahmen zu halten.

Gemäß einem Aspekt der Erfindung weisen die Querrippen eine Höhe im Bereich von 1,6 mm bis 3,2 mm auf. Die Mindestprofiltiefe bei PKW-Sommerreifen beträgt in Deutschland 1,6 mm, allerdings ist ein Wechsel der Reifen spätestens bei Profiltiefen von ca. 3 mm empfehlenswert, da sich die Fahreigenschaften, insbesondere bei Nässe, verschlechtern. Weisen die Querrippen nun eine Höhe im Bereich von 1,6 mm bis 3,2 mm auf, so ist es möglich, zumindest einen Teil der Querrippen zugleich als Abriebindikatoren zu nutzen. Auf diese Weise werden die ohnehin erforderlichen Abriebindikatoren mit einer zusätzlichen Funktion versehen.

Gemäß einem Aspekt der Erfindung weisen die Querrippen eine Breite im Bereich von 2% bis 10% der Breite des Laufstreifenprofils auf. Auch über die Breite der Querrippen lässt sich die Geräuschbildung beeinflussen. Hier sind allerdings Grenzen dadurch gegeben, dass die Breite der Querrippen letztlich durch die Breite der Umfangsrillen bestimmt ist und diese nicht beliebig anpassbar ist. Die Umfangsrillen dienen einerseits der Ableitung von Wasser, sodass sie eine gewisse Mindestbreite aufweisen müssen. Andererseits gehen breite Umfangsrillen zu Lasten der Breite der Profilbänder. In Hinblick auf die Laufeigenschaften und das Bremsverhalten müssen auch die Profilbänder eine Mindestbreite aufweisen, sodass die Breite der Umfangsrillen auch nach oben begrenzt ist.

Weitere Merkmale der vorliegenden Erfindung werden aus der nachfolgenden Beschreibung und den angehängten Ansprüchen in Verbindung mit den Figuren ersichtlich.

### Figurenübersicht

- Fig. 1: zeigt schematisch in perspektivischer Darstellung einen Schnitt durch ein Laufstreifenprofil eines erfindungsgemäßen Fahrzeugreifens;
- Fig. 2: zeigt schematisch unterschiedlich ausgestaltete Querrippen in benachbarten Umfangsrillen;
- Fig. 3: zeigt schematisch unterschiedlich ausgestaltete Querrippen innerhalb einer Umfangsrille;
- Fig. 4: zeigt ein Geräuschprofil eines erfindungsgemäßen Fahrzeugreifens;
- Fig. 5: zeigt schematisch ein Verfahren zum Entwerfen eines Fahrzeugreifens;
- Fig. 6: zeigt eine erste Ausführungsform einer Vorrichtung zum Entwerfen eines Fahrzeugreifens; und
- Fig. 7: zeigt eine zweite Ausführungsform einer Vorrichtung zum Entwerfen eines Fahrzeugreifens.

### Figurenbeschreibung

Zum besseren Verständnis der Prinzipien der vorliegenden Erfindung werden nachfolgend Ausführungsformen der Erfindung anhand der Figuren detaillierter erläutert. Gleiche Bezugszeichen werden in den Figuren für gleiche oder gleichwirkende Elemente verwendet und nicht notwendigerweise zu jeder Figur erneut beschrieben. Es versteht sich, dass sich die Erfindung nicht auf die dargestellten Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

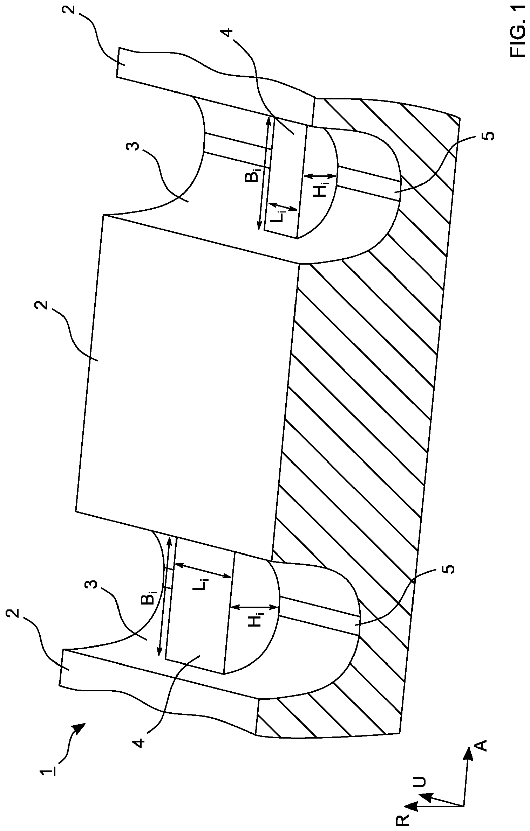

Fig. 1 zeigt schematisch in perspektivischer Darstellung einen Schnitt durch ein Laufstreifenprofil eines erfindungsgemäßen Fahrzeugreifens 1. Über den Umfang des Fahrzeugreifens 1 erstrecken sich in Umfangsrichtung U des Fahrzeugreifens 1 ausgerichtete Profilbänder 2, die in axialer Richtung A des Fahrzeugreifens 1 nebeneinander angeordnet sind. Die Profilbänder 2 sind in axialer Richtung A durch Umfangsrillen 3 voneinander getrennt. Die Umfangsrillen 3 erstrecken sich über den gesamten Umfang des Fahrzeugreifens 1 und sind in Umfangsrichtung U ausgerichtet. In den Umfangsrillen 3 sind Querrippen 4 angeordnet, von denen in Fig. 1 exemplarisch nur zwei dargestellt sind, jeweils eine Querrippe 4 in jeder der dargestellten Umfangsrillen 3. Die Querrippen 4 sind dabei ausgebildet, während eines Fahrbetriebs die am Fahrzeugreifen 1 auftretenden Luftströmungen so zu beeinflussen, dass aus den Luftströmungen resultierende Geräusche über ein breites Frequenzspektrum verteilt werden. Zu diesem Zweck haben die Querrippen 4 unterschiedliche Eigenschaften, die im Rahmen der Reifenentwicklung bestimmt werden. Insbesondere variieren die Querrippen 4 in der Länge Lᵢ in Umfangsrichtung. Zusätzlich können die Querrippen 4 in der Höhe Hᵢ gemessen in radialer Richtung R in Bezug auf einen Rillengrund 5 und der Breite Bi in axialer Richtung A variieren. Zudem können die Abstände Dᵢ aufeinanderfolgender Querrippen 4 in Umfangsrichtung U variieren, sowohl innerhalb einer einzelnen Umfangsrille 3 als auch bei Betrachtung benachbarter Umfangsrillen 3.

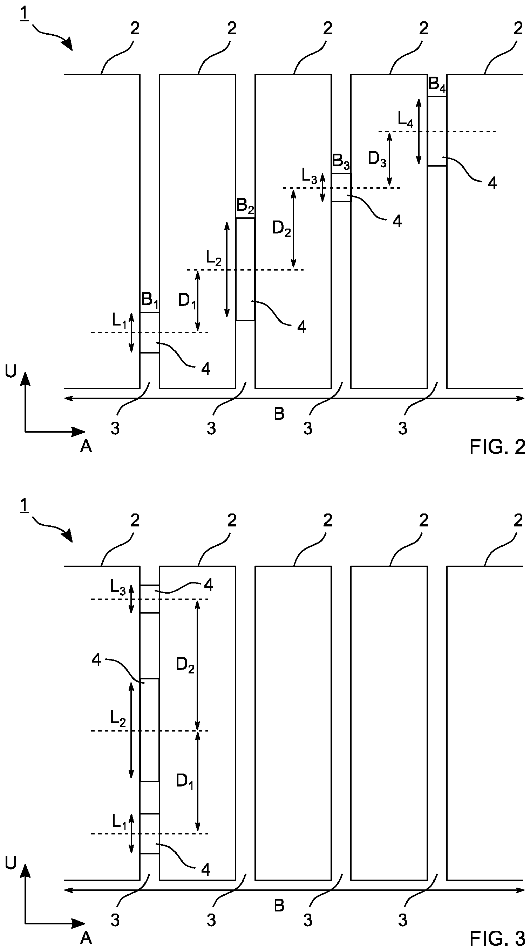

Fig. 2 zeigt schematisch ein Laufstreifenprofil eines Fahrzeugreifens 1 mit unterschiedlich ausgestalteten Querrippen 4 in benachbarten Umfangsrillen 3. Dargestellt sind fünf Profilbänder 2, d.h. zwei außenliegende Schulterprofilbänder und drei zentrale Profilbänder. Zwischen den Profilbändern 2 befindet sich jeweils eine Umfangsrille 3. In diesem Beispiel ist in jeder der Umfangsrillen 3 genau eine Querrippe 4 dargestellt. Natürlich befinden sich in Umfangsrichtung U weitere Querrippen 4 in den Umfangsrillen 3. Die Querrippen 4 weisen unterschiedliche Längen Lᵢ auf. Die Längen Lᵢ liegen dabei im Bereich von 5 mm bis 60 mm. Im dargestellten Beispiel ist L₁=10 mm, L₂=25 mm, L₃=7 mm und L₄=17 mm. Die Abstände Dᵢ der in Umfangsrichtung U aufeinanderfolgenden Querrippen 4 sind so gewählt, dass das Verhältnis aufeinanderfolgender Abstände Di im Bereich von 1 bis 3 liegt. Dabei bildet der größere Abstand den Zähler dieses Verhältnisses, während der kleinere Abstand den Nenner darstellt. Im dargestellten Beispiel beträgt das Verhältnis von D₁ und D₂ 1,29, während das Verhältnis von D₂ und D₃ 1,4 ist. Die absoluten Größen der Abstände Di spielen keine Rolle, sofern das Verhältnis innerhalb des vorgegebenen Bereichs liegt. Die Abstände Di können insbesondere für unterschiedliche Reifengrößen unterschiedlich ausfallen. Die Breite Bi der Querrippen 4 in axialer Richtung A beträgt in diesem Beispiel konstant 5 mm, sie kann aber ebenfalls variiert werden. Die Breite Bi liegt dabei vorzugsweise im Bereich von 2% bis 10% der Breite B des Laufstreifenprofils. Als Breite B des Laufstreifenprofils wird dabei diejenige Breite bezeichnet, auf der das Laufstreifenprofil im Fahrbetrieb die Fahrbahn berührt. Die Höhe Hᵢ der Querrippen 4 in radialer Richtung, die in Fig. 2 nicht zu sehen ist, liegt vorzugsweise im Bereich von 1,6 mm bis 3,2 mm.

Fig. 3 zeigt schematisch unterschiedlich ausgestaltete Querrippen 4 innerhalb einer Umfangsrille 3 des Laufstreifenprofils. Der Einfachheit halber sind nur für eine einzige Umfangsrille 3 die Querrippen 4 eingezeichnet. Selbstverständlich weisen auch die weiteren Umfangsrillen 3 Querrippen 4 auf. Wie schon zuvor haben die Querrippen 4 unterschiedliche Längen Lᵢ, die wiederum im Bereich von 5 mm bis 60 mm liegen. Im dargestellten Beispiel ist L₁=10 mm, L₂=25 mm und L₃=7 mm. Die Abstände Di der in Umfangsrichtung U aufeinanderfolgenden Querrippen 4 innerhalb der Umfangsrille 3 sind so gewählt, dass das Verhältnis aufeinanderfolgender Abstände Di im Bereich von 1 bis 3 liegt. Dabei bildet der größere Abstand den Zähler dieses Verhältnisses, während der kleinere Abstand den Nenner darstellt. Wie schon in Fig. 2 beträgt das Verhältnis von D₁ und D₂ im dargestellten Beispiel 1,29.

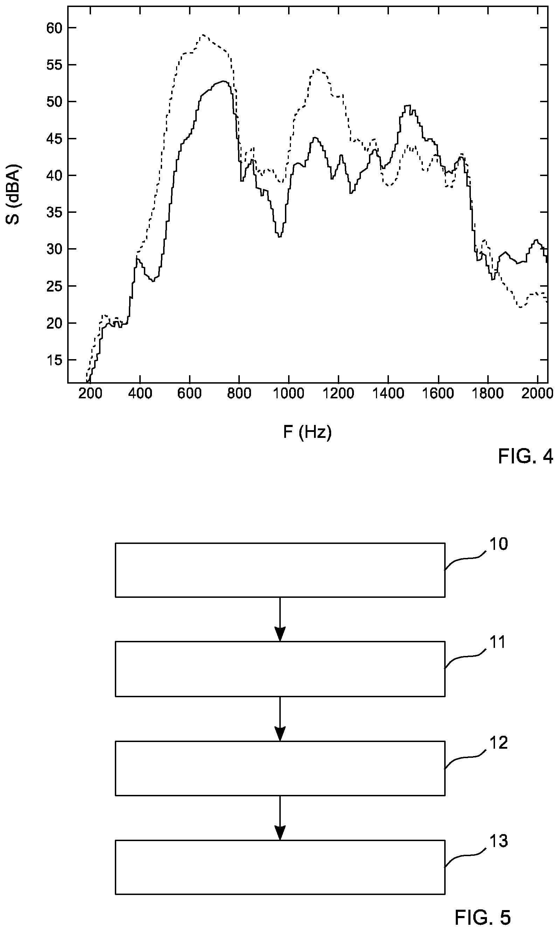

Fig. 4 zeigt ein Geräuschprofil eines erfindungsgemäßen Fahrzeugreifens im Vergleich zu einem Fahrzeugreifen ohne optimierte Ausgestaltung der Querrippen. Aufgetragen ist der Schalldruck S in dBA gegen die Frequenz F in Hz. Die gestrichelte Linie zeigt das Geräuschprofil des Fahrzeugreifens ohne optimierte Ausgestaltung der Querrippen. Das Geräuschprofil weist einen ausgeprägten Peak bei ca. 650 Hz sowie einen weiteren Peak bei ca. 1100 Hz auf. Diese werden von Personen deutlich wahrgenommen und als störend empfunden. Die durchgezogene Linie zeigt demgegenüber das Geräuschprofil eines erfindungsgemäßen Fahrzeugreifens. Grundlage für diese Simulation ist ein Reifen mit den im Zusammenhang mit Fig. 2 aufgeführten Parametern. Auch dieses Geräuschprofil weist Peaks bei ca. 700 Hz und 1300 Hz auf, die allerdings weniger ausgeprägt sind. Auch insgesamt ist der Schalldruck deutlich niedriger, sodass die auftretenden Geräusche als weniger störend empfunden werden.

Fig. 5 zeigt schematisch ein Verfahren zum Entwerfen eines Fahrzeugreifens. Bei dem Verfahren werden zunächst initiale Parameter der Querrippen des Laufstreifenprofils des Fahrzeugreifens ausgewählt 10. Diese können beispielsweise durch einen Entwickler vorgegeben werden, aus einer Datenbank mit typischen Parametern entnommen werden oder zufällig aus vorgegebenen Wertebereichen für die Parameter selektiert werden. Die Parameter beschreiben dabei die Höhen der Querrippen in Bezug auf einen Rillengrund, die Längen der Querrippen in Umfangsrichtung, die Breite der Querrippen oder die Abstände der Querrippen in Umfangsrichtung. Dabei können sowohl die Abstände aufeinanderfolgender Querrippen innerhalb einer Umfangsrille als auch die Abstände aufeinanderfolgender Querrippen in benachbarten Umfangsrillen betrachtet werden. Anschließend werden die in einem Fahrbetrieb des Fahrzeugreifens auftretende Geräusche für eine Vielzahl von Abwandlungen der initialen Parameter der Querrippen simuliert 11. Dabei handelt es sich um einen iterativen Prozess, bei dem ausgehend von den initialen Parametern die individuellen Parameter der verschiedenen Querrippen innerhalb vorgegebener Wertebereiche variiert werden und jeweils das zugehörige Geräuschprofil ermittelt wird. Beispielsweise kann für die Höhen der Querrippen ein Wertebereich von 1,6 mm bis 3,2 mm vorgegeben werden. Für die Längen der Querrippen kann ein Wertebereich von 5 mm bis 60 mm vorgesehen sein. Die Breite der Querrippen sollte im Bereich von 2% bis 10% der Breite des Laufstreifenprofils liegen. Für die Abstände aufeinanderfolgender Querrippen wird vorzugsweise ein Verhältnis von Abständen aufeinanderfolgender Querrippen betrachtet. Dieses sollte im Bereich von 1 bis 3 liegen. Schließlich wird ein auf Basis der Simulationsergebnisse ein Satz von Parametern der Querrippen bestimmt 12, für die die im Fahrbetrieb auftretenden Geräusche über ein breites Frequenzspektrum verteilt sind. Dabei werden die Parameter der Querrippen derart bestimmt 12, dass die innerhalb einer Umfangsrille angeordneten Querrippen zumindest zum Teil unterschiedliche Längen in Umfangsrichtung aufweisen. Vorzugsweise sind die Geräusche dabei homogen über das breite Frequenzspektrum verteilt. Dieser Satz von Parametern kann dann ausgegeben werden 13 und im Rahmen der Herstellung der Fahrzeugreifen genutzt werden. Bei dem resultierenden Satz von Parametern ergeben sich regelmäßig unterschiedliche Parameter für verschiedene Querrippen, d.h. das resultierende Laufstreifenprofil weist eine Vielzahl unterschiedlich ausgestalteter Querrippen auf.

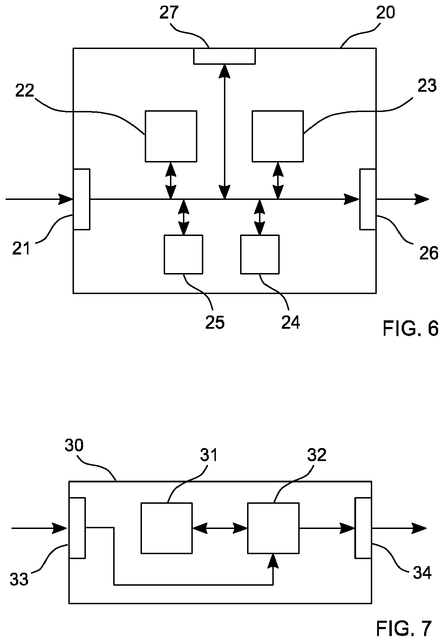

Fig. 6 zeigt eine vereinfachte schematische Darstellung einer ersten Ausführungsform einer Vorrichtung 20 zum Entwerfen eines Fahrzeugreifens. Die Vorrichtung 20 hat einen Eingang 21, über den beispielsweise Simulationsparameter oder Informationen zu Eigenschaften von Fahrzeugreifen empfangen werden können. Mittels einer Auswahleinheit 22 kann die Vorrichtung initiale Parameter der Querrippen des Laufstreifenprofils des Fahrzeugreifens auswählen. Diese können beispielsweise durch einen Entwickler vorgegeben werden, aus einer Datenbank mit typischen Parametern entnommen werden oder zufällig aus vorgegebenen Wertebereichen für die Parameter selektiert werden. Die Parameter beschreiben dabei die Höhen der Querrippen in Bezug auf einen Rillengrund, die Längen der Querrippen in Umfangsrichtung, die Breite der Querrippen oder die Abstände der Querrippen in Umfangsrichtung. Dabei können sowohl die Abstände aufeinanderfolgender Querrippen innerhalb einer Umfangsrille als auch die Abstände aufeinanderfolgender Querrippen in benachbarten Umfangsrillen betrachtet werden. Ausgehend von den initialen Parametern simuliert eine Recheneinheit 23 die in einem Fahrbetrieb des Fahrzeugreifens auftretenden Geräusche für eine Vielzahl von Abwandlungen der initialen Parameter der Querrippen. Dabei führt die Recheneinheit 23 einen iterativen Prozess aus, bei dem ausgehend von den initialen Parametern die individuellen Parameter der verschiedenen Querrippen innerhalb vorgegebener Wertebereiche variiert werden und jeweils das zugehörige Geräuschprofil ermittelt wird. Beispielsweise kann für die Höhen der Querrippen ein Wertebereich von 1,6 mm bis 3,2 mm vorgegeben werden. Für die Längen der Querrippen kann ein Wertebereich von 5 mm bis 60 mm vorgesehen sein. Die Breite der Querrippen sollte im Bereich von 2% bis 10% der Breite des Laufstreifenprofils liegen. Für die Abstände aufeinanderfolgender Querrippen wird vorzugsweise ein Verhältnis von Abständen aufeinanderfolgender Querrippen betrachtet. Dieses sollte im Bereich von 1 bis 3 liegen. Schließlich bestimmt die Recheneinheit 23 Parameter der Querrippen, für die die im Fahrbetrieb auftretenden Geräusche über ein breites Frequenzspektrum verteilt sind. Dabei werden die Parameter der Querrippen derart bestimmt, dass die innerhalb einer Umfangsrille angeordneten Querrippen zumindest zum Teil unterschiedliche Längen in Umfangsrichtung aufweisen. Vorzugsweise sind die Geräusche dabei homogen über das breite Frequenzspektrum verteilt. Bei dem resultierenden Satz von Parametern ergeben sich regelmäßig unterschiedliche Parameter für verschiedene Querrippen, d.h. das resultierende Laufstreifenprofil weist eine Vielzahl unterschiedlich ausgestalteter Querrippen auf.

Die Auswahleinheit 22 und die Recheneinheit 23 können von einer Kontrolleinheit 24 gesteuert werden. Über eine Benutzerschnittstelle 27 können gegebenenfalls Einstellungen der Auswahleinheit 22, der Recheneinheit 23 oder der Kontrolleinheit 24 geändert werden. Zudem kann die Benutzerschnittstelle 27 auch für die Auswahl der initialen Parameter genutzt werden. Die in der Vorrichtung 20 anfallenden Daten können bei Bedarf in einem Speicher 25 abgelegt werden, beispielsweise für eine spätere Auswertung oder für eine Nutzung durch die Komponenten der Vorrichtung 20. Zudem können die Daten über den Ausgang 26 der Vorrichtung 20 für eine weitere Verarbeitung bereitgestellt werden. Insbesondere kann der resultierende Satz von Parametern bereitgestellt werden, damit er im Rahmen der Herstellung der Fahrzeugreifen genutzt werden kann. Der Eingang 21 und der Ausgang 26 können zu einer bidirektionalen Schnittstelle zusammengefasst sein. Die Auswahleinheit 22, die Recheneinheit 23 sowie die Kontrolleinheit 24 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU.

Fig. 7 zeigt eine vereinfachte schematische Darstellung einer zweiten Ausführungsform einer Vorrichtung 30 zum Entwerfen eines Fahrzeugreifens. Die Vorrichtung 30 weist einen Prozessor 32 und einen Speicher 31 auf. Beispielsweise handelt es sich bei der Vorrichtung 30 um einen Computer oder eine Workstation. Im Speicher 31 sind Instruktionen abgelegt, die die Vorrichtung 30 bei Ausführung durch den Prozessor 32 veranlassen, die Schritte gemäß dem beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen, insbesondere von Nutzereingaben oder Simulationsparametern. Vom Prozessor 32 generierte Daten werden über einen Ausgang 34 bereitgestellt. Darüber hinaus können sie im Speicher 31 abgelegt werden. Im Speicher 31 können zudem Messdaten oder Berechnungsergebnisse abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 25, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

### Bezugszeichenliste

- 1: Fahrzeugreifen
- 2: Profilband
- 3: Umfangsrille
- 4: Querrippe
- 5: Rillengrund
- 10: Auswählen von initialen Parametern der Querrippen
- 11: Simulieren von auftretenden Geräuschen
- 12: Bestimmen von geeigneten Parametern
- 13: Ausgeben der Parameter
- 20: Vorrichtung
- 21: Eingang
- 22: Auswahleinheit
- 23: Recheneinheit
- 24: Kontrolleinheit
- 25: Speicher
- 26: Ausgang
- 27: Benutzerschnittstelle
- 30: Vorrichtung
- 31: Speicher
- 32: Prozessor
- 33: Eingang
- 34: Ausgang
- B: Breite des Laufstreifenprofils
- Bi: Breite einer Querrippe
- Dᵢ: Abstand von Querrippen in Umfangsrichtung
- Hᵢ: Höhe einer Querrippe
- Lᵢ: Länge einer Querrippe in Umfangsrichtung

## Patentansprüche

1. Fahrzeugreifen (1) mit einem Laufstreifenprofil mit durch Umfangsrillen (3) voneinander getrennten Profilbändern (2) und mit in den Umfangsrillen (3) angeordneten Querrippen (4), wobei die Querrippen (4) ausgebildet sind, während eines Fahrbetriebs am Fahrzeugreifen (1) auftretende Luftströmungen so zu beeinflussen, dass aus den Luftströmungen resultierende Geräusche über ein breites Frequenzspektrum verteilt werden, wobei die Querrippen (4) jeweils eine Höhe (Hᵢ) über einem Rillengrund (5) der jeweiligen Umfangsrille (3) haben und sich jeweils über eine gesamte Breite der jeweiligen Umfangsrille (3) erstrecken, **dadurch gekennzeichnet, dass** die innerhalb einer Umfangsrille (3) angeordneten Querrippen (4) zumindest zum Teil unterschiedliche Längen (Li) in einer Umfangsrichtung (U) des Fahrzeugreifens (1) aufweisen.

2. Fahrzeugreifen (1) gemäß Anspruch 1, wobei die Geräusche homogen über das breite Frequenzspektrum verteilt werden.

3. Fahrzeugreifen (1) gemäß Anspruch 1 oder 2, wobei die Querrippen (4) zumindest zum Teil unterschiedliche Höhen (Hᵢ) in Bezug auf einen Rillengrund (30) oder unterschiedliche Abstände (Dᵢ) in Umfangsrichtung (U) aufweisen.

4. Fahrzeugreifen (1) gemäß Anspruch 3, wobei ein Verhältnis von Abständen (Dᵢ) aufeinanderfolgender Querrippen (4) innerhalb einer Umfangsrille (3) im Bereich von 1 bis 3 liegt.

5. Fahrzeugreifen (1) gemäß Anspruch 3 oder 4, wobei ein Verhältnis von Abständen (Dᵢ) aufeinanderfolgender Querrippen (4) in benachbarten Umfangsrillen (3) im Bereich von 1 bis 3 liegt.

6. Fahrzeugreifen (1) gemäß einem der Ansprüche 1 bis 5, wobei die Querrippen (4) eine Länge (Li) im Bereich von 5 mm bis 60 mm aufweisen.

7. Fahrzeugreifen (1) gemäß einem der Ansprüche 3 bis 6, wobei die Querrippen (4) eine Höhe (Hᵢ) im Bereich von 1,6 mm bis 3,2 mm aufweisen.

8. Fahrzeugreifen (1) gemäß einem der Ansprüche 3 bis 7, wobei die Querrippen (4) eine Breite (Bᵢ) im Bereich von 2% bis 10% der Breite (B) des Laufstreifenprofils aufweisen.

9. Fahrzeugreifen (1) gemäß einem der vorherigen Ansprüche, wobei zumindest ein Teil der Querrippen (4) als Abriebindikatoren ausgestaltet ist.

10. Verfahren zum Entwerfen eines Fahrzeugreifens (1), mit den Schritten:
- Auswählen (10) von initialen Parametern von Querrippen (4) eines Laufstreifenprofils des Fahrzeugreifens (1);
- Simulieren (11) von in einem Fahrbetrieb des Fahrzeugreifens (1) auftretenden Geräuschen für eine Vielzahl von Abwandlungen der initialen Parameter der Querrippen (4); und
- Bestimmen (12) von Parametern der Querrippen (4), für die die im Fahrbetrieb auftretenden Geräusche über ein breites Frequenzspektrum verteilt sind;
wobei die Querrippen (4) jeweils eine Höhe (Hᵢ) über einem Rillengrund (5) der jeweiligen Umfangsrille (3) haben und sich jeweils über eine gesamte Breite der jeweiligen Umfangsrille (3) erstrecken, **dadurch gekennzeichnet, dass** die Parameter der Querrippen (4) derart bestimmt werden, dass die innerhalb einer Umfangsrille (3) angeordneten Querrippen (4) zumindest zum Teil unterschiedliche Längen (Li) in einer Umfangsrichtung (U) des Fahrzeugreifens (1) aufweisen.

11. Computerprogramm mit Instruktionen, die bei Ausführung durch einen Computer den Computer zur Ausführung der Schritte des Verfahrens gemäß Anspruch 10 zum Entwerfen eines Fahrzeugreifens (1) veranlassen.

12. Vorrichtung (20) zum Entwerfen eines Fahrzeugreifens (1), mit:
- einer Auswahleinheit (22) zum Auswählen (10) von initialen Parametern von Querrippen (4) eines Laufstreifenprofils des Fahrzeugreifens (1); und
- einer Recheneinheit (23) zum Simulieren (11) von in einem Fahrbetrieb des Fahrzeugreifens (1) auftretenden Geräuschen für eine Vielzahl von Abwandlungen der initialen Parameter der Querrippen (4) und zum Bestimmen (12) von Parametern der Querrippen (4), für die die im Fahrbetrieb auftretenden Geräusche über ein breites Frequenzspektrum verteilt sind;
wobei die Querrippen (4) jeweils eine Höhe (Hᵢ) über einem Rillengrund (5) der jeweiligen Umfangsrille (3) haben und sich jeweils über eine gesamte Breite der jeweiligen Umfangsrille (3) erstrecken, **dadurch gekennzeichnet, dass** die Recheneinheit (23) eingerichtet ist, die Parameter der Querrippen (4) derart zu bestimmen, dass die innerhalb einer Umfangsrille (3) angeordneten Querrippen (4) zumindest zum Teil unterschiedliche Längen (Li) in einer Umfangsrichtung (U) des Fahrzeugreifens (1) aufweisen.

## Claims

1. Vehicle tyre (1) comprising a tread profile with profile bands (2), which are separated from one another by circumferential grooves (3), and with transverse ribs (4), which are arranged in the circumferential grooves (3), the transverse ribs (4) being designed to influence air flows occurring at the vehicle tyre (1) during driving operation in such a way that noises resulting from the air flows are distributed over a broad frequency spectrum, the transverse ribs (4) having in each case a height (Hᵢ) over a groove base (5) of the respective circumferential groove (3) and extending in each case over an entire width of the respective circumferential groove (3), **characterized in that** at least some of the transverse ribs (4) arranged within a circumferential groove (3) have different lengths (Lᵢ) in a circumferential direction (U) of the vehicle tyre (1).

2. Vehicle tyre (1) according to Claim 1, the noises being distributed homogeneously over the broad frequency spectrum.

3. Vehicle tyre (1) according to Claim 1 or 2, at least some of the transverse ribs (4) having different heights (Hᵢ) with respect to the groove base (30) or different spacings (Dᵢ) in the circumferential direction (U).

4. Vehicle tyre (1) according to Claim 3, a ratio of spacings (Dᵢ) of successive transverse ribs (4) within a circumferential groove (3) lying in the range from 1 to 3.

5. Vehicle tyre (1) according to Claim 3 or 4, a ratio of spacings (Dᵢ) of successive transverse ribs (4) in adjacent circumferential grooves (3) lying in the range from 1 to 3.

6. Vehicle tyre (1) according to one of Claims 1 to 5, the transverse ribs (4) having a length (Lᵢ) in the range from 5 mm to 60 mm.

7. Vehicle tyre (1) according to one of Claims 3 to 6, the transverse ribs (4) having a height (Hᵢ) in the range from 1.6 mm 3.2 mm.

8. Vehicle tyre (1) according to one of Claims 3 to 7, the transverse ribs (4) having a width (Bᵢ) in the range from 2% to 10% of the width (B) of the tread profile.

9. Vehicle tyre (1) according to one of the preceding claims, at least some of the transverse ribs (4) being designed as wear indicators.

10. Method for designing a vehicle tyre (1), comprising the steps of:
- selecting (10) initial parameters of transverse ribs (4) of a tread profile of the vehicle tyre (1);
- simulating (11) noises occurring during driving operation of the vehicle tyre (1) for a multiplicity of modifications of the initial parameters of the transverse ribs (4); and
- determining (12) parameters of the transverse ribs (4) for which the noises occurring during driving operation are distributed over a broad frequency spectrum;
the transverse ribs (4) having in each case a height (Hᵢ) over a groove base (5) of the respective circumferential groove (3) and extending in each case over an entire width of the respective circumferential groove (3), **characterized in that** the parameters of the transverse ribs (4) are determined in such a way that at least some of the transverse ribs (4) arranged within a circumferential groove (3) have different lengths (Lᵢ) in a circumferential direction (U) of the vehicle tyre (1).

11. Computer program with instructions which, when performed by a computer, cause the computer to perform the steps of the method according to Claim 10 for designing a vehicle tyre (1).

12. Device (20) for designing a vehicle tyre (1), comprising
- a selecting unit (22) for selecting (10) initial parameters of transverse ribs (4) of a tread profile of the vehicle tyre (1); and
- a computing unit (23) for simulating (11) noises occurring during driving operation of the vehicle tyre (1) for a multiplicity of modifications of the initial parameters of the transverse ribs (4) and for determining (12) parameters of the transverse ribs (4) for the noises occurring during driving operation over a broad frequency spectrum;
the transverse ribs (4) having in each case a height (Hᵢ) over a groove base (5) of the respective circumferential groove (3) and extending in each case over an entire width of the respective circumferential groove (3), **characterized in that** the computing unit (23) is set up to determine the parameters of the transverse ribs (4) in such a way that at least some of the transverse ribs (4) arranged within a circumferential groove (3) have different lengths (Lᵢ) in a circumferential direction (U) of the vehicle tyre (1).

## Revendications

1. Pneumatique de véhicule (1) avec un profil de bande de roulement ayant des bandes de profil (2) séparées les unes des autres par des rainures périphériques (3) et ayant des nervures transversales (4) agencées dans les rainures périphériques (3), les nervures transversales (4) étant conçues pour influencer les écoulements d'air apparaissant sur le pneumatique de véhicule (1) pendant le roulement de telle sorte que les bruits résultant des écoulements d'air soient répartis sur un large spectre de fréquences, les nervures transversales (4) ayant chacune une hauteur (Hᵢ) au-dessus d'un fond de rainure (5) de la rainure circonférentielle respective (3) et s'étendant chacune sur toute une largeur de la rainure circonférentielle respective (3), **caractérisé en ce que** les nervures transversales (4) agencées à l'intérieur d'une rainure circonférentielle (3) présentent au moins en partie des longueurs différentes (Li) dans une direction circonférentielle (U) du pneumatique de véhicule (1).

2. Pneumatique de véhicule (1) selon la revendication 1, dans lequel les bruits sont répartis de manière homogène sur le large spectre de fréquences.

3. Pneumatique de véhicule (1) selon la revendication 1 ou la revendication 2, dans lequel les nervures transversales (4) présentent au moins en partie des hauteurs (Hᵢ) différentes par rapport à un fond de gorge (30) ou des distances (Dᵢ) différentes dans la direction circonférentielle (U).

4. Pneumatique de véhicule (1) selon la revendication 3, dans lequel un rapport d'espacement (Dᵢ) de nervures transversales successives (4) à l'intérieur d'une rainure circonférentielle (3) est compris entre 1 et 3.

5. Pneumatique de véhicule (1) selon la revendication 3 ou la revendication 4, dans lequel un rapport d'espacement (Dᵢ) de nervures transversales successives (4) dans des rainures circonférentielles adjacentes (3) est compris entre 1 et 3.

6. Pneumatique de véhicule (1) selon l'une des revendications 1 à 5, dans lequel les nervures transversales (4) ont une longueur (Lᵢ) comprise entre 5 mm et 60 mm.

7. Pneumatique de véhicule (1) selon l'une des revendications 3 à 6, dans lequel les nervures transversales (4) présentent une hauteur (Hᵢ) comprise entre 1,6 mm et 3,2 mm.

8. Pneumatique de véhicule (1) selon l'une des revendications 3 à 7, dans lequel les nervures transversales (4) ont une largeur (Bᵢ) comprise entre 2% et 10% de la largeur (B) de la bande de roulement.

9. Pneumatique de véhicule (1) selon l'une des revendications précédentes, dans lequel au moins une partie des nervures transversales (4) est configurée comme des indicateurs d'usure.

10. Procédé de conception d'un pneumatique de véhicule (1), comprenant les étapes suivantes :
- sélectionner (10) des paramètres initiaux de nervures transversales (4) d'un profil de bande de roulement du pneumatique de véhicule (1) ;
- simuler (11) des bruits se produisant lors du roulement du pneumatique de véhicule (1) pour une pluralité de variations des paramètres initiaux des nervures transversales (4) ; et
- déterminer (12) des paramètres des nervures transversales (4) pour lesquels les bruits apparaissant lors du roulement sont répartis sur un large spectre de fréquences ;
les nervures transversales (4) ayant chacune une hauteur (Hi) au-dessus d'un fond de rainure (5) de la rainure circonférentielle respective (3) et s'étendant chacune sur toute une largeur de la rainure circonférentielle respective (3), **caractérisé en ce que** les paramètres des nervures transversales (4) sont déterminés de telle sorte que les nervures transversales (4) agencées à l'intérieur d'une rainure circonférentielle (3) présentent au moins en partie des longueurs différentes (Li) dans une direction circonférentielle (U) du pneumatique (1) du véhicule.

11. Programme informatique comprenant des instructions qui, lorsqu'elles sont exécutées par un ordinateur, font que l'ordinateur exécute les étapes d'un procédé selon la revendication 10 pour fabriquer un élément de moule pour pneu (R) à l'aide d'un dispositif d'impression 3D (1).

12. Dispositif (20) de conception d'un pneumatique de véhicule (1), comprenant :
- une unité de sélection (22) pour sélectionner (10) des paramètres initiaux de nervures transversales (4) d'un profil de bande de roulement du pneumatique de véhicule (1) ; et
- une unité de calcul (23) pour simuler (11) des bruits se produisant dans lors du roulement du pneumatique de véhicule (1) pour une pluralité de variations des paramètres initiaux des nervures transversales (4) et pour déterminer (12) des paramètres des nervures transversales (4) pour lesquels les bruits se produisant lors du roulement sont répartis sur un large spectre de fréquences ;
les nervures transversales (4) ayant chacune une hauteur (Hᵢ) au-dessus d'un fond de rainure (5) de la rainure circonférentielle respective (3) et s'étendant chacune sur toute une largeur de la rainure circonférentielle respective (3), **caractérisé en ce que** l'unité de calcul (23) est conçue pour déterminer les paramètres des nervures transversales (4) de telle sorte que les nervures transversales (4) agencées à l'intérieur d'une rainure circonférentielle (3) présentent au moins en partie des longueurs différentes (Li) dans une direction circonférentielle (U) du pneumatique de véhicule (1).
